# EUROPÄISCHE PATENTSCHRIFT

(11) **EP 3 057 204 B1**
(45) Veröffentlichungstag und Bekanntmachung des Hinweises auf die Patenterteilung: **01.04.2020**
(21) Anmeldenummer: 16000277.0
(22) Anmeldetag: 04.02.2016
(51) Int. Cl.: H02K 1/27, H02K 15/03

(54) **PUMPE MIT ELEKTROMOTOR**
PUMP WITH AN ELECTRIC MOTOR
POMPE EQUIPEE D'UN MOTEUR ELECTRIQUE

(30) Priorität: 16.02.2015 DE 102015102207
(43) Veröffentlichungstag der Anmeldung: 17.08.2016
(73) Patentinhaber: OASE GmbH, 48477 Hörstel-Riesenbeck (DE)
(72) Erfinder: Lambers, Herbert, 48477 Hörstel-Riesenbeck (DE)
(74) Vertreter: Busse & Busse

(56) Entgegenhaltungen:
- US-A1- 2009 261 678
- US-A1- 2014 028 119

## Beschreibung

Die Erfindung betrifft eine Pumpe mit einem Elektromotor, insbesondere eine Flüssigkeitspumpe nach dem Oberbegriff des Anspruchs 1.

Bei Pumpen, die einen einerseits kleinen, andererseits jedoch besonders leistungsfähigen Elektromotor erfordern, wird der Rotor in der Praxis aus einer Metall- oder Keramikwelle gebildet, auf die ein Magnet aufgesteckt und mit der Welle verklebt ist. Meist erfolgt anschließend noch eine Umspritzung mit Kunststoff. Diese Ausgestaltung ermöglicht zwar eine sehr kompakte Bauweise, jedoch hängt das übertragbare Drehmoment im Wesentlichen von der gewählten Verklebung ab. Auch unterliegen die Verklebungen teils einer Materialermüdung, so dass die Dauer der Belastbarkeit begrenzt ist. Die Verklebung muss deswegen extrem hochwertig und damit teuer sein, um den erforderlichen Kraftschluss zu gewährleisten. Zum Auswuchten des Rotors werden in dem Magnet selbst eine oder mehrere Bohrungen eingebracht. Dort können jedoch starke Korrosionsprozesse einsetzten, die den gesamten Magneten befallen können.

Die DE 84 27 706 U1 zeigt einen Rotor für eine permanent magnetisch erregte elektrische Maschine, bei der der Magnet aus auf einem Magnethalter aufgeklebten und/oder ummantelten Magnetsegmenten gebildet wird. Die US 5 898 990 zeigt einen Rotor, bei dem ringförmige Permanentmagneten auf einem Magnethalter durch Klebstoff fixiert werden. In der DE 10 2006 034 354 ist ein Rotor gezeigt, bei dem Welle und Magnet in einem Zweikomponenten-Spritzgussverfahren gemeinsam ausgeformt werden. Welle und Magnet sind somit stoffschlüssig verbunden. Aus der US 2014/0028119 A1 ist ein Rotor mit Permanentmagneten zu ersehen, die über eine Zwischenbuchse formschlüssig zueinander positioniert und auf der Rotorwelle umlaufend mitgenommen werden. Eine Umhüllung mit einer aushärtenden Kunststoffmischung wird in einer Gussform aufgebracht, um die Magnete einzukapseln. Die US 2008/0048517 A1 sieht eine Halterung der Magnete durch Kunststoffformleisten und mit einem durch Presssitz aufgebrachten Mantel vor. Beide vorgenannten Dokumente lassen keine Vorkehrungen zum Auswuchten erkennen.

Einen Rotor nach dem Oberbegriff des Anspruchs 1 ist aus der US 2009/0261678 A1 zu ersehen, bei dem Permanentmagnete durch eine Bandage aus Filamenten formschlüssig auf einer Mitnehmerhülse fixiert sind und zu beiden axialen Stirnenden mit Endkappen ausgestattet sind, die Gewindebohrungen zur Aufnahme von schraubenförmigen Balance-Gewichten aufweisen. Die Fertigung dieses Rotors wie auch der zuvor betrachteten Rotoren ist jeweils aufwendig und mit vielen Arbeitsschritten verbunden.

Der Erfindung liegt daher die Aufgabe zugrunde, eine Pumpe anzugeben, die über die Rotorkonstruktion des Elektromotors eine hohe Leistungsfähigkeit und Lebensdauer bei kompakter

Bauweise des Elektromotors zu günstigen Bedingungen ermöglicht. Besondere Relevanz hat dies für Teich- und Aquarienpumpen, die geringe Baugröße mit hoher Leistungsfähigkeit vereinen müssen.

Diese Aufgabe wird erfindungsgemäß von einem Rotor nach dem Oberbegriff des Anspruchs 1 ausgehend mit den kennzeichnenden Merkmalen des Anspruches gelöst. Dabei ist der Magnet mit der Welle formschlüssig zu einem Rotor verbunden ist. Dazu weist bevorzugt zumindest ein Teilbereich der Welle wenigstens einen Mitnehmer auf. Dieser kann mit der Welle einstückig ausgebildet sein oder in einem separaten Element, das mit der Welle insbesondere formschlüssig verbunden ist. Der Mitnehmer kann einen oder mehrere Vorsprünge oder Ausnehmungen aufweisen, die sich in fertig montiertem Zustand im Formschluss mit dem Magneten befinden. Besonders bevorzugt ist der Mitnehmer hülsenartig ausgebildet und auf die Welle aufgesteckt, oder die Welle ist mit dem Mitnehmer umspritzt. Der Formschluss kann dabei dadurch verwirklicht sein, dass die Welle zumindest eine Abflachung aufweist, an der eine entsprechende Wandverdickung der Mitnehmerhülse passgenau anliegt.

Zur Erleichterung der Montage kann der Magnet bevorzugt aus mehreren Magnetsegmenten bestehen. Diese sind vorzugsweise als Kreisringsegmente ausgebildet. Wenn der Mitnehmer entsprechende Vorsprünge aufweist, können diese in die Zwischenräume zwischen den Magnetsegmenten eingreifen, so dass bei fester Verbindung der Magnetsegmente wiederum ein Formschluss zwischen dem daraus entstandenen Magneten und der Welle gegeben ist. Zur Bildung einer Magnetbaugruppe, insbesondere in Form eines Ringmagneten, ist es vorteilhaft, die Magnetsegmente mit wenigstens einer, vorzugsweise jedoch beidseitig mit Endkappen zu versehen, die die Magnetsegmente halten. Die Verbindung zwischen den Endkappen und den Magnetsegmenten kann formschlüssig, beispielsweise klemmend, oder mit einer Klebeverbindung erfolgen, da diese nur zur Fixierung dient und keine größeren Kräfte zu übertragen hat.

Die gesamte Magnetbaugruppe ist von einem Rotormantel in Form eines Rotortopfes umgeben. Die Magnetbaugruppe ist im Rotormantel eingegossen bzw. im Rotormantel von Vergussmasse umgeben.

Weiterhin ist bei der erfindungsgemäßen Pumpe mit Vorteil am Rotor stirnseitig zumindest ein Wuchtelement zum Beispiel aus Edelstahl vorgesehen werden. Dieses kann bei geringem Materialeinsatz die Lebensdauer des Rotors erheblich verlängern. Wird nämlich wie herkömmlich zum Auswuchten des Rotors in dem Magnet selbst eine oder mehrere Bohrungen eingebracht, so setzen dort starke Korrosionsprozesse ein, die den gesamten Magneten befallen können. Werden hingegen wie vorgeschlagen Auswuchtungsbohrungen in ein separates Wuchtelement eingebracht, bleibt der Magnet unversehrt und ohne negative Korrosionseinwirkung.

Um eine exakte Montage des Rotors zu vereinfachen und die Notwendigkeit von Auswuchtungen zu verringern ist es von Vorteil, dass der Rotor eines oder mehrere Zentrierelemente für die Welle und/oder für die Magnetbaugruppe aufweist, die bei einer Montage unmittelbar für eine korrekte Positionierung sorgen. Bevorzugt und bauteilsparend kann bereits das Wuchtelement ein Zentrierelement bilden.

Um eine exakte Montage des Rotors zu vereinfachen und die Notwendigkeit von Auswuchtungen zu verringern ist es von Vorteil, dass der Rotor eines oder mehrere Zentrierelemente für die Welle und/oder für die Magnetbaugruppe aufweist, die bei einer Montage unmittelbar für eine korrekte Positionierung sorgen. Bevorzugt und bauteilsparend kann bereits das Wuchtelement ein Zentrierelement bilden.

Weitere Vorteile und Einzelheiten ergeben sich aus den Ansprüchen und Unteransprüchen sowie einem Ausführungsbeispiel der Erfindung, das im Folgenden beschrieben wird; es zeigen:
- Fig. 1: den Rotor einer erfindungsgemäßen Pumpe im Schnitt, mit Detailvergrößerung A und B sowie c) bis f) deren Montage,
- Fig. 2: einen Querschnitt durch den Gegenstand aus Fig. 1 in Richtung II-II mit einer Detailvergrößerung C,
- Fig. 3a) und b): die Magnetbaugruppe aus Fig. 1 in zwei Darstellungen,
- Fig. 3c) bis f): die Montage der Magnetbaugruppe,
- Fig. 4a) und b),: den Rotor aus Fig. 1 in Sprengdarstellung und zusammengesetzt und
- Fig. 5a) bis e): verschiedene Schritte des Montageverfahrens des Rotors.

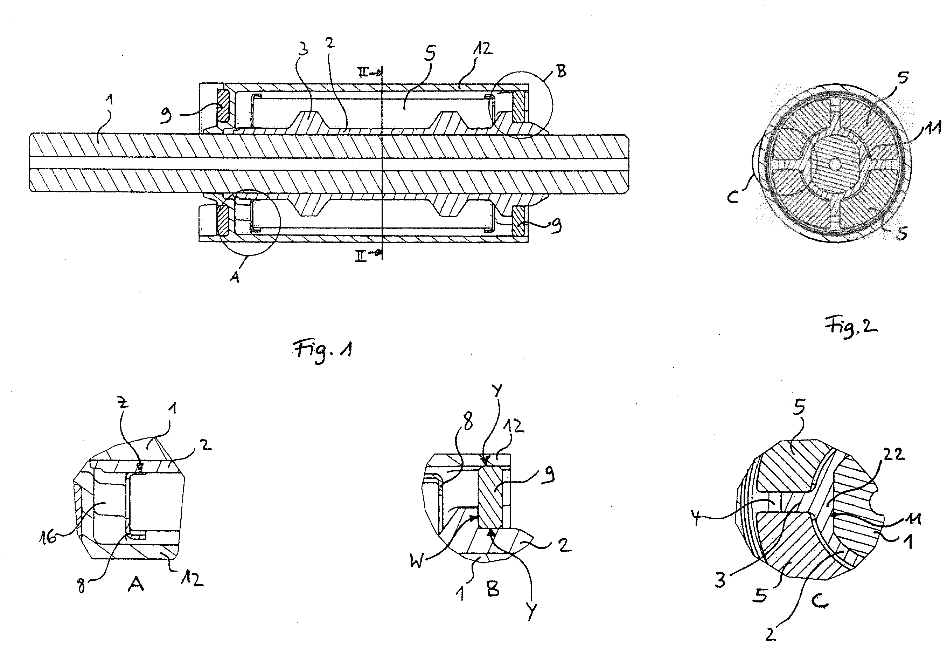

Der in den Fig. 1, 2 und 4 dargestellte Rotor besteht aus einer Welle 1 mit einem diese bereichsweise hülsenartig umgebenden Mitnehmer 2. Der Mitnehmer 2 weist Vorsprünge 3 auf, die im fertig montierten Zustand in Zwischenräume 4 zwischen Magnetsegmenten 5 eingreifen.

Der Mitnehmer 2 ist mit der Welle 1 formschlüssig verbunden. Bei der dargestellten Ausführungsform wird dies durch seitliche Abflachungen 11 der Welle 1 verwirklicht, an denen passgerecht geformte Bereiche größerer Wandungsdicke 22 des Mitnehmers 2 anliegen. Über die Vorsprünge 3 und die Anordnung der Magnetsegmente 5 ist wiederum der Mitnehmer 2 formschlüssig mit einer die Magnetsegmente 5 beinhaltenden Magnetbaugruppe 6 verbunden, wodurch mittelbar auch eine formschlüssige Verbindung zwischen der Welle 1 und den Magneten 5, 6 hergestellt ist. Die Details hierzu sind insbesondere in Fig. 2 Detail C erkennbar.

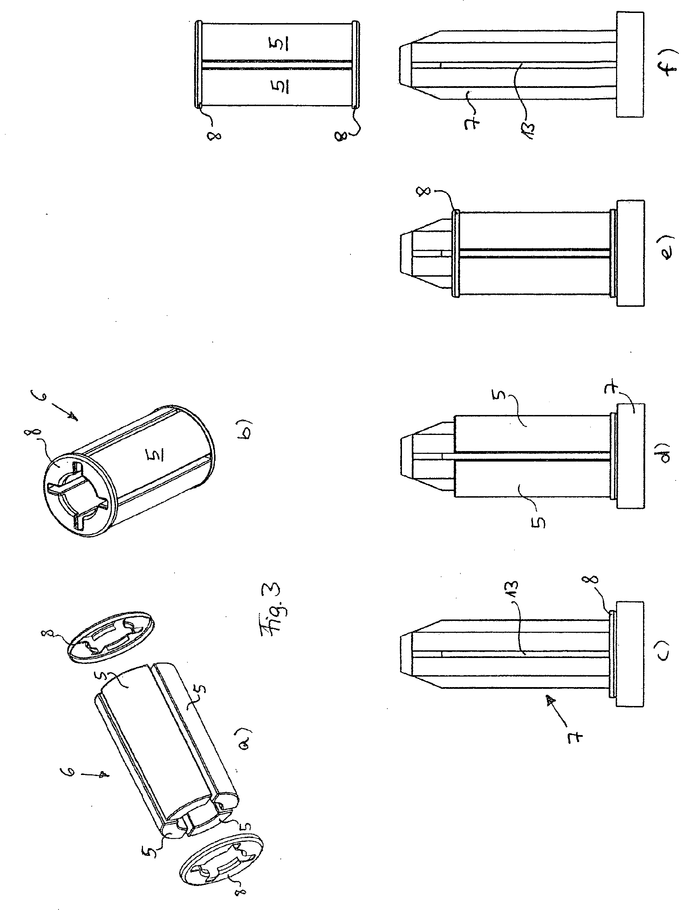

In Fig. 3 ist die Magnetbaugruppe 6 sowie deren Montage dargestellt. Dies erfolgt bevorzugt unter Verwendung einer Montagehilfe 7, auf die zunächst eine Endkappe 8 aufgelegt wird. Auf der Endkappe 8 werden stirnseitig mit Kleber fixiert die Magnetsegmente 5 positioniert, wobei den Vorsprüngen 3 des Mitnehmers 2 entsprechende Vorsprünge 13 der Montagehilfe 7 bei der Positionierung helfen. Auf der obigen Stirnseite der Magnetsegmente 5 wird ebenfalls mit Kleber fixiert eine weitere Endkappe 8 aufgebracht. Nach Aushärtung des Klebers kann die Magnetbaugruppe 6, die hier einen Ringmagnet bildet, nach oben von der Montagehilfe 7 abgenommen werden.

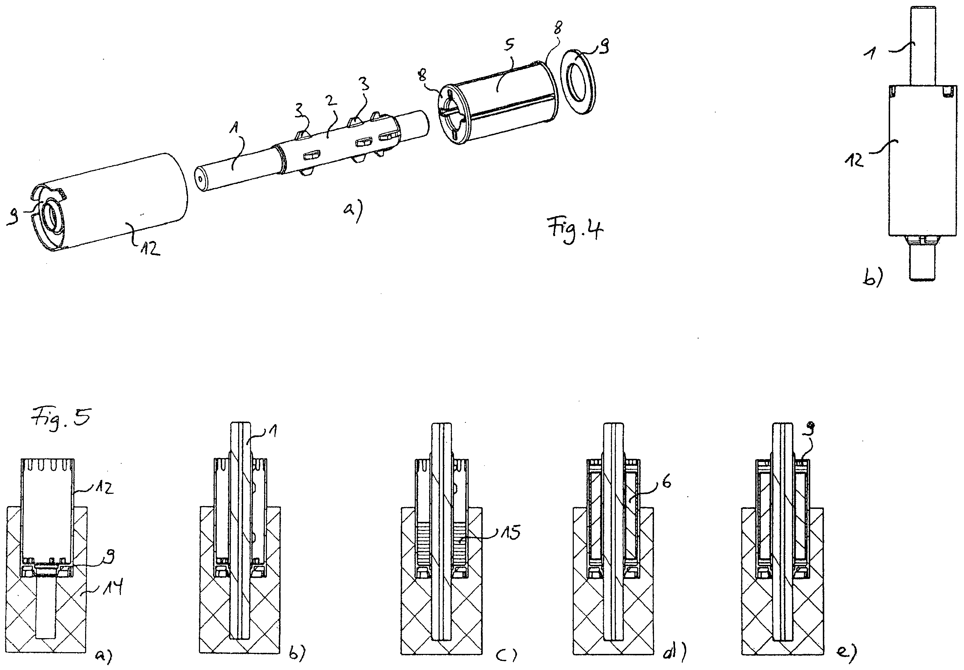

Die Fig. 4 und 5 zeigen, wie sich der fertige Rotor zusammensetzt und wie dieser montiert wird. Dazu wird ein Rotormantel 12, in den bevorzugt untenseitig bereits ein Wuchtelement 9 eingespritzt ist und der so einen Rotortopf bildet, in eine Montagevorrichtung 14 eingesetzt. Die zuvor mit dem Mitnehmer 2 versehene Welle 1 wird sodann bis zu einem Anschlag in die Montagevorrichtung eingesetzt. Der Mitnehmer 2 ist bevorzugt um die Welle 1 herum gespritzt. Fig. c) zeigt, wie in die freien Bereiche des Rotormantels 12 bzw. Rotortopfs eine vordosierte Menge Vergussmasse 15 eingefüllt wird. Nun wird in Fig. 4 d) die Magnetbaugruppe 6 auf die Welle 1 und den Mitnehmer 2 passgenau aufgesetzt und verdrängt Teile der Vergussmasse 15 nach oben, wodurch die Magnetbaugruppe 6 vollständig im Rotormantel 12 vergossen ist. Den oberen stirnseitigen Abschluss bildet gemäß Fig. 4 e) ein weiteres Wuchtelement 9, dass den Rotormantel 12 bzw. den Rotortopf nach oben abschließt und ebenfalls von der Vergussmasse gehalten wird.

Ein späteres Auswuchten des Rotors kann auf einfache Weise durch Einbringen von Bohrungen in das bzw. die Wuchtelemente 9 erfolgen.

Die Details A und B der Fig. 1 verdeutlichen schließlich, wie die Zentrierung Z der Magnetbaugruppe 6 durch deren Endkappen 8 an dem Mitnehmer 2 erfolgt (Detail A). Zur Abstützung in Wellenlängsrichtung liegt die Magnetbaugruppe 6 über ihre Endkappe 8 darüber hinaus an einem Anschlag 16 des Rotormantels 12 an. Detail B zeigt die Zentrierung Y des Rotormantels 12 mittels des Wuchtelementes 9, das hier ein Zentrierelement bildet. In Wellenlängsrichtung wiederum liegt das Wuchtelement 9 an einem Anschlag W des Mitnehmers 2 an.

Der erfindungsgemäße Rotor ermöglicht auf einfache, kostengünstige, jedoch äußerst stabile Weise die Herstellung der beanspruchten Pumpen, die sich durch kleine Bauform bei hoher Leistung und Langlebigkeit auszeichnen.

## Patentansprüche

1. Pumpe mit einem Elektromotor, der einen Rotor, enthaltend eine Welle (1) und einen diese umgebenden Magnet aufweist, der mit der Welle (1) formschlüssig verbunden und von einem Rotormantel (12) umgeben ist, wobei der Rotor stirnseitig zumindest ein Wuchtelement aufweist, **dadurch gekennzeichnet, dass** der Rotormantel (12) mit einem untenseitig eingespritzten Wuchtelement (9) zum Einbringen von Auswuchtungsbohrung(en) einen Rotortopf bildet, den ein weiteres Wuchtelement (9) nach oben abschließt und die Magnetbaugruppe (6) im Rotormantel (12) von Vergussmasse (15) umgeben ist.

2. Pumpe nach Anspruch 1, **dadurch gekennzeichnet, dass** die Welle (1) zumindest bereichsweise von einem Mitnehmer (2) umgeben ist, der mit der Welle (1) einstückig oder mit dieser zumindest auch formschlüssig verbunden ist.

3. Pumpe nach Anspruch 2, **dadurch gekennzeichnet, dass** der Magnet aus mindestens zwei Magnetsegmenten (5) besteht und der Mitnehmer (2) Vorsprünge (3) aufweist, die in Zwischenräume (4) zwischen den Magnetsegmenten (5) eingreifen.

4. Pumpe nach Anspruch 3, **dadurch gekennzeichnet, dass** die Magnetsegmente (5) mit zumindest einer Endkappe (8) zu einer Magnetbaugruppe (6) verbunden sind.

5. Pumpe nach einem der vorstehenden Ansprüche, **dadurch gekennzeichnet, dass** der Rotor Zentrierelement(e) für die Welle (1) und/oder eine Magnetbaugruppe (6) aufweist.

6. Pumpe nach Anspruch 5, **dadurch gekennzeichnet, dass** das Wuchtelement (9) ein Zentrierelement bildet.

## Claims

1. Pump comprising an electric motor which has a rotor including a shaft (1) and a magnet which encloses said shaft, is form-fittingly connected to the shaft (1) and is enclosed by a rotor shell (12), the rotor having, on its end face, at least one balancing element, **characterised in that** the rotor shell (12) forms a rotor pot together with a balancing element (9) which is intended for introducing balancing bore(s) and is injection moulded on the bottom face, which rotor pot is sealed at the top by a further balancing element (9), and the magnet assembly (6) is enclosed by casting compound (15) in the rotor shell (12).

2. Pump according to claim 1, **characterised in that** the shaft (1) is enclosed at least in regions by a driver (2) which is integrally connected to the shaft (1) or is at least also form-fittingly connected thereto.

3. Pump according to claim 2, **characterised in that** the magnet consists of at least two magnet segments (5) and the driver (2) has projections (3) which engage in gaps (4) between the magnet segments (5).

4. Pump according to claim 3, **characterised in that** the magnet segments (5) are connected to at least one end cap (8) so as to form a magnet assembly (6).

5. Pump according to any of the preceding claims, **characterised in that** the rotor has centring element(s) for the shaft (1) and/or a magnet assembly (6).

6. Pump according to claim 5, **characterised in that** the balancing element (9) forms a centring element.

## Revendications

1. Pompe avec un moteur électrique présentant un rotor contenant un arbre (1) et un aimant entourant celui-ci, relié à l'arbre (1) par complémentarité de forme et entouré d'une enveloppe de rotor (12), dans laquelle le rotor présente à son extrémité au moins un élément d'équilibrage, **caractérisée en ce que** l'enveloppe de rotor (12) forme, avec un élément d'équilibrage (9) injecté par en dessous et destiné à la mise en place d'un ou de plusieurs alésage(s) d'équilibrage, une cloche de rotor qui termine vers le haut un autre élément d'équilibrage (9) et l'ensemble magnétique (6) est entouré par une masse de scellement (15) au sein de l'enveloppe de rotor (12).

2. Pompe selon la revendication 1, **caractérisée en ce que** l'arbre (1) est entouré au moins par endroits d'un toc d'entraînement (2) faisant intégralement partie de l'arbre (1) ou relié au moins par complémentarité de forme à celui-ci.

3. Pompe selon la revendication 2, **caractérisée en ce que** l'aimant est constitué d'au moins deux segments d'aimant (5) et le toc d'entrainement (2) présente des saillies (3) qui viennent en prise dans des espaces intermédiaires (4) situés entre les segments d'aimant (5).

4. Pompe selon la revendication 3, **caractérisée en ce que** les segments d'aimant (5) sont reliés à au moins un capuchon d'extrémité (8) pour fournir un ensemble magnétique (6).

5. Pompe selon l'une quelconque des revendications précédentes, **caractérisée en ce que** le rotor présente un ou des élément (s) de centrage pour l'arbre (1) et/ou un ensemble magnétique (6).

6. Pompe selon la revendication 5, **caractérisée en ce que** l'élément d'équilibrage (9) forme un élément de centrage.
